# EUROPEAN PATENT SPECIFICATION

(11) **EP 1 719 721 B1**
(45) Date of publication and mention of the grant of the patent: **10.04.2013**
(21) Application number: 06009009.9
(22) Date of filing: 01.05.2006
(51) Int. Cl.: B65G 47/96

(54) **Sorting device**
Sortiereinrichtung
Dispositif de tri

(30) Priority: 02.05.2005 NL 1028929
(43) Date of publication of application: 08.11.2006
(73) Proprietor: VANDERLANDE INDUSTRIES NEDERLAND B.V., 5466 RB Veghel (NL)
(72) Inventor: van de Ven, Antonius Adrianus Petrus, 5612 LM Eindhoven (NL)
(74) Representative: Dorna, Peter

(56) References cited:
- DE-B- 1 263 600
- US-A- 3 147 845
- US-A- 4 031 998
- US-B1- 6 607 066
- PATENT ABSTRACTS OF JAPAN vol. 009, no. 092 (M-373), 20 April 1985 (1985-04-20) -& JP 59 217524 A (ISEKI NOKI KK), 7 December 1984 (1984-12-07)

## Description

The present invention relates to a sorting device according to the preamble of claim 1.

A sorting device is known from WO-A1-9929601. Said known sorting device comprises a sorting conveyor provided with a plurality of carrying elements being evenly distributed over the length of the sorting conveyor. The carrying elements each comprise permanent magnets. A supply conveyor transfers containers to the sorting conveyor, with fixed pairs of successive carrying elements of the sorting conveyor taking over the containers. The containers in turn carry products such as pieces of luggage. Pivot means are provided for sorting out said containers in lateral direction. Said pivot means comprise pivot arms, which pivot arms are pivotally connected to the successive carrying elements with one end, alternately on the left-hand side and on the right-hand side, and which are provided with guide wheels at their opposite end, which guide wheels travel in respective opposed parallel guide sections. To cause the carrying elements to pivot in pairs, pivot guide sections are provided above or below the guide sections, towards which the guide wheels are guided by suitably actuating a switch element simultaneously both for the front and for the rear carrying element of the pair of carrying elements in question. Upon pivoting, the container is held by the magnets of the carrying elements, but the product that is present in the container will slide from the container onto a discharge conveyor or a chute or the like under the influence of the force of gravity. After selective pivoting and thus sorting has taken place, the container is transferred to a discharge conveyor again by the sorting conveyor.

A sorting device as described above is used in luggage handling systems at airports, in particular large airports. There is a demand for luggage handling systems capable of handling luggage with increasingly larger capacities/speeds. Within this context, the sorting device according to WO-A1-9929601 has this drawback that a certain degree of synchronisation between the supply conveyor and the sorting conveyor is required in order to realise an adequate transfer of pieces of luggage. In practice this actually implies that the supply conveyor stops after a container has arrived at the end thereof and waits for a suitable moment to transfer the container to the sorting conveyor, which is driven continuously. Apart from the fact that such a repetitive start-stop situation is disadvantageous for the supply conveyor from a mechanical point of view, this course of affairs has this additional significant drawback that the moments at which the supply conveyor is temporarily stationary, or at least not moving at maximum speed, constitutes a limitation as regards the number of products that can be handled by the sorting conveyor per unit time.

US patent US 6,607,066 B1 describes a tilt-tray sorting device according to the preamble of claim 1 which makes it possible to connect constructionally different trays of adjacent conveying units to obtain fixed combinations of two or maximally three trays so as to jointly form one supporting surface, as it were, for a relatively long product.

The object of the invention is to provided a sorting device according to the introductory paragraph which makes it possible to achieve a higher sorting capacity than with the sorting device according to WO-A1-9929601, in spite of the fact that the conveying speed of the sorting conveyor remains unchanged. The sorting conveyor according to the invention comprises connecting means for temporarily interconnecting a group of adjacent carrying elements, so that pivoting of some of the carrying elements of said group of interconnected adjacent carrying elements will cause the other elements of said group of interconnected adjacent carrying elements to pivot along therewith. Thus a precondition for rendering the synchronisation between the supply conveyor and the sorting conveyor unnecessary is met, in the sense that it is no longer necessary for the supply conveyor to stop (or, alternatively, decelerate) temporarily in connection with the transfer to the sorting conveyor. Instead of using fixed combinations of carrying elements, as is the case with the sorting device according to WO-A1-9929601, the connecting means used in the present invention make it possible to use dynamic (temporary) combinations of a group of interconnected adjacent carrying elements, wherein it is not possible to vary not only the composition of a group of interconnected adjacent carrying elements but in principle also the number of carrying elements of such a group in dependence on the length of the object to be supported by the interconnected adjacent carrying elements. Thus it becomes possible to handle objects of varying length on the sorting device, which products are closely spaced together on the sorting conveyor. Since adjacent carrying elements are interconnected, said interconnected adjacent carrying elements are capable only of joint pivoting movement.

The pivot means preferably comprise a stationary cam track, along which a cam element of a carrying element can selectively travel so as to selectively pivot the carrying element in question as well as the carrying elements connected therewith. Thus, in principle only one cam element for each group of interconnected carrying elements suffices for causing said group of carrying elements to pivot, in which connection it is possible to have the cam element travel along the stationary cam track or not.

Quite preferably, the pivot means comprise a cam element for each carrying element. Thus the most appropriate cam element of each group of interconnected carrying elements can be selected for causing said group of carrying elements to pivot. The most appropriate cam element will generally be the cam element associated with the carrying element or a carrying element that is located centrally in the group of interconnected carrying elements. In the case of a group of five carrying elements this would mean, for example, that the cam element of the third carrying element is used for pivoting the group of carrying elements, whilst in the case of a group of, for example, six carrying elements the cam element associated with the third or the fourth carrying element will be used for that purpose. It is assumed within this context that the centre of gravity of the object being supported on the respective group of carrying elements will be positioned approximately halfway the length, seen in the direction of transport.

The selective manner of pivoting interconnected carrying elements can be realised in an advantageous manner if each cam element can be driven to selectively place the cam element into contact with the cam track or keeping the cam element spaced from the cam track.

Alternatively, the cam track may comprise a drivable entry portion, which can be selectively moved into or out of the path of movement of cam element. When the entry portion is positioned in the path of movement of a cam element, the entry portion will lead the cam element to the cam track, whereas the cam element will not travel along the stationary cam track, and pivoting will thus not take place, when, on the contrary, the entry portion is not positioned in the path of movement of a cam element.

According to the present invention, the sorting device comprises separate containers for accommodating the products to be sorted therein, wherein the products to be sorted are each transferred to a group of adjacent carrying elements of the sorting conveyor in a container of the supply conveyor, which group of carrying elements is provided with holding means for holding the container upon pivoting of a carrying platform with a container present thereon, whilst a product being accommodated in the container slides off the container. The use of such containers and holding means renders the sorting device highly suitable for handling products of varying dimensions, such as pieces of luggage at airports. The holding means prevent the containers themselves from sliding off the carrying elements upon pivoting of the adjacent carrying elements which, incidentally, are temporarily interconnected by the connecting means at that moment.

Preferably, the holding means comprise an upright edge for each carrying element, against which the container abuts in the pivoted position of the adjacent carrying elements that support the container. It stands to reason that the height of said upright edges must not be such that it would prevent products from sliding off the container.

According to the invention the connecting means comprise an engagement element for each carrying element, which engagement element functions to engage the container. Thus the container forms the connecting factor between adjacent carrying elements. Said engagement need not by definition take place in a mechanical manner, but it might also be effected by magnetic means. An important advantage that is obtained with the present invention is that no intelligence whatever is required for connecting the group of carrying elements that support a container. Nor is it necessary for the composition of groups to be constant, not even as regards the size thereof, although generally the containers will have the same length in practice.

A very suitable manner of engagement is realised if the engagement elements are arranged for engaging a side of the container that extends parallel to the direction of transport.

Thus, the container may be clamped between the engagement elements on the one hand and an upright edge provided for each carrying element on the other hand. Consequently, another preferred embodiment is characterised in that the engagement elements are arranged for clamping the container against the upright edge.

A stable support of the containers by the carrying elements, without any synchronisation between the supply conveyor and the sorting conveyor being required, can be obtained in particular if the dimensions of the containers, seen in the direction of transport, are such that each container is supported by at least three carrying elements on the sorting conveyor.

Precisely in order to obtain large capacities, it is preferable if the sorting conveyor is an endless conveyor. The endless path of the sorting conveyor may extend both in the horizontal plane and in the vertical plane in that case. An important advantage of the use of an endless path in the horizontal plane is the fact that the full length of the sorting conveyor, possibly with the exception of the non-rectilinear portions thereof, can be utilised for sorting products, whereas in the case of endless paths extending in the vertical plane only the upper (rectilinear) portion is available for sorting. In the latter case the advantage is that the sorting device requires less space and that it can be incorporated in a rectilinear conveying path.

In general it can furthermore be stated that preferably detection means are provided for determining on which adjacent carrying elements a product to be sorted is transferred from the supply conveyor to the sorting conveyor, and that control means are provided for driving the connecting means on the basis of information from the detection means for interconnecting the adjacent carrying elements in question.

According to a very important preferred embodiment, the connecting means operate independently of the possible presence of a container on associated carrying elements. This is to be understood to include the situation in which the connecting means perform the operations that would be required for connecting adjacent carrying elements via a container not only in the case that such a container is present on the carrying elements in question but also in the case that such a container is not present on the carrying elements in question. In the latter case, the operations are to certain extent unnecessary. On the other hand, the preferred embodiment in question has this important advantage that the control system need not be arranged for effecting a connection of carrying elements via the connecting means in dependence on the possible presence of container on the carrying elements in question.

Preferably, detection means are furthermore generally provided for determining on which adjacent carrying elements a product to be sorted is transferred from the supply conveyor to the sorting conveyor, and control means are provided for driving the pivot means on the basis of information from the detection means. The pivot means may be driven in such a manner that an optimally advantageous mechanical load will act on the connection between adjacent carrying elements.

This latter advantage can be achieved in particular if said control means are arranged for driving the front, and preferably only, cam element associated with a carrying element of a group of adjacent carrying elements interconnected by the connecting means, said associated carrying element being positioned in the centre of the group of interconnected adjacent carrying elements, for selectively placing the driven cam element into contact with a cam track. Since the centre of gravity of a product to be sorted will generally be located at a point halfway the length thereof, it is also advantageous to apply the forces required for pivoting a group of interconnected adjacent carrying elements in the centre of said group of interconnected adjacent carrying elements.

Especially if the pivoting of interconnected carrying elements can take place only in one lateral direction, it is preferable if the pivot axis is located at a position off the centre of the dimension of the carrying elements, seen in horizontal direction transversely to the direction of transport, which leads to a more advantageous mechanical load being exerted on the carrying elements and which, in addition, may enable a reduction of the required height of the sorting device.

For reasons of constructional simplicity it is quite preferable if all the carrying elements are of identical construction.

The advantages of the present invention concerning the possibility of dynamically interconnecting adjacent carrying elements, thus obviating the need for synchronisation between the sorting conveyor on the one hand and a discharge conveyor or a supply conveyor on the other hand, play a role in particular if at least two, preferably at least three carrying means are provided per metre, seen in the direction of transport.

The invention further relates to a method of operating a sorting device for sorting products, according to claim 19.

The advantages of the method according to the invention will be apparent to those skilled in the art in the light of the preceding discussion of the (preferred embodiment of the) device according to the invention.

The present invention will now be explained in more detail by means of a description of preferred embodiments of the present invention, in which reference is made to the following figures:
Figure 1 is a perspective view of an embodiment of a sorting device;
Figures 2a and 2b are perspective views of a group of interconnected carrying elements of the sorting device of figure 1, with an empty container in horizontal position and in pivoted position, respectively, present thereon;
Figure 3 is a schematic view of the layout of a stationary cam track system as used in the sorting device of figure 1;
Figure 4 is a perspective view of a single carrying element forming part of the sorting device of figure 1;
Figure 5 shows five adjacent connecting elements at a lower level (level V in figure 7) thereof;
Figure 6 shows the five adjacent connecting elements of figure 5 at an upper level (level VI in figure 7) thereof;
Figure 7 is a view according to VII in figures 5 and 6;
Figures 8a and 8b show a mechanism as used in the connecting elements of figures 5 and 6 in two respective extreme positions;
Figure 9 is a schematic plan view of five carrying elements of a first preferred embodiment of a sorting device according to the invention, with a container present thereon;
Figures 10a and 10b are views along the lines Xa and Xb, respectively, in figure 9;
Figure 11 is a schematic, perspective plan view of five carrying elements of a second preferred embodiment of a sorting device according to the invention;
Figure 12 shows an individual carrying element;
Figure 13 shows a clamping mechanism forming part of each carrying element;
Figure 14 shows an extending mechanism for a guide wheel associated with each carrying element;
Figure 15 shows a sliding shaft with an actuating pin associated with the extending mechanism of figure 14.

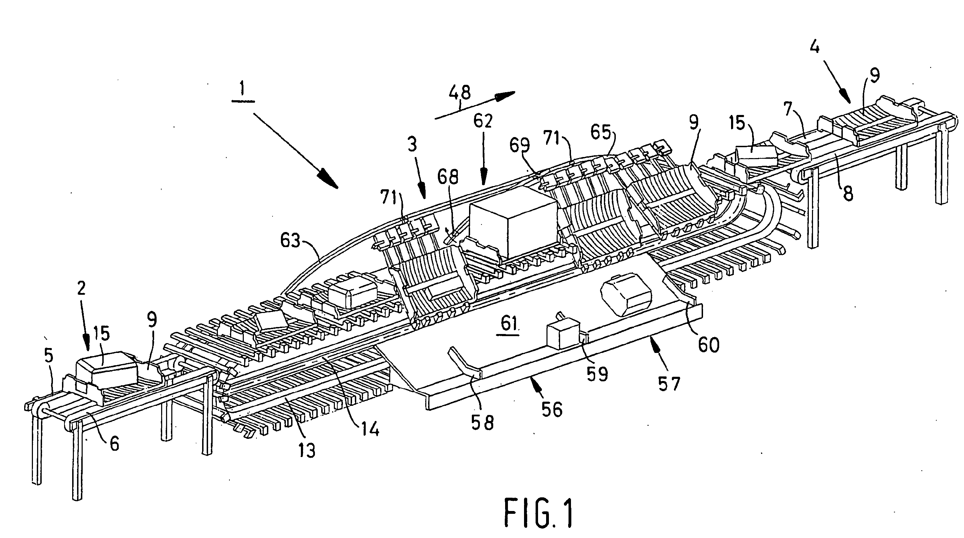

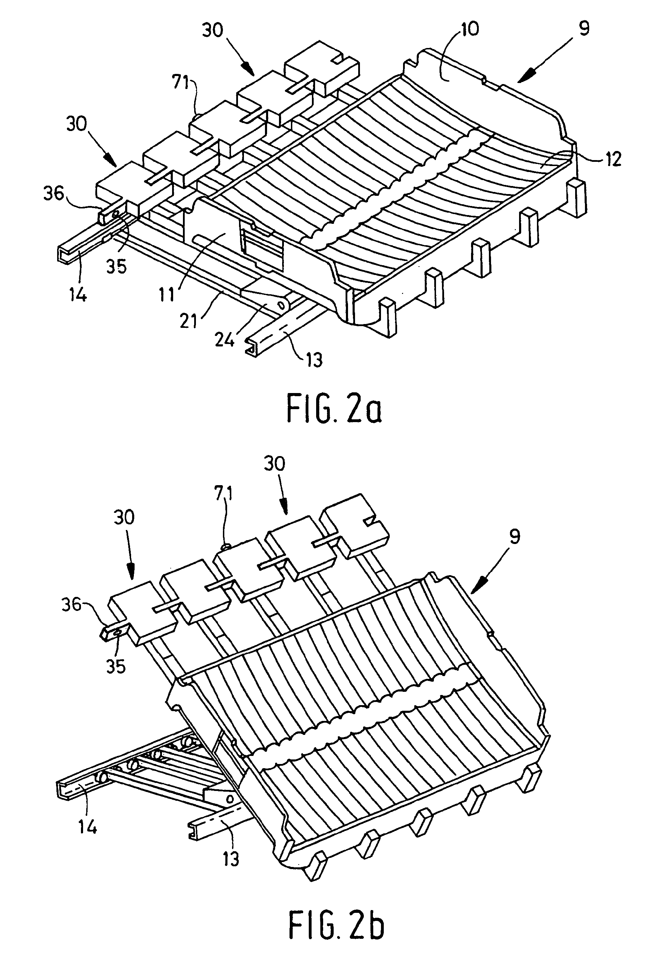

The sorting device 1 according to figure 1 comprises a supply conveyor 2, a sorting conveyor 3 and a discharge conveyor 4. The supply conveyor 2 and the discharge conveyor 4 are of the same type, they each comprise two parallel, spaced-apart belts 5, 6 and 7, 8, respectively, which are passed over pulleys. The sorting device 1 further comprises a number of containers 9, one empty container of which is shown in more detail in figures 2a and 2b. The containers comprise upright walls 10, 11 on the front side and the rear side, respectively, and a hollow bottom 12. No upright wall like the upright walls 10, 11 is provided at the longitudinal edges of said hollow bottom, so that in principle products being supported on the hollow bottom 12 of a container 9 can freely slide off said hollow bottom 12 when the container 9 is pivoted sideways, as is shown in figure 2b.

The supply conveyor 2 and the sorting conveyor 3 connect to each other in such a manner that transfer of containers 9 containing products 15 to be sorted can take place between the two. The sorting conveyor 3 is an endless type of conveyor and comprises two horizontal U-shaped guide sections 13, 14, which extend parallel to each other and which each describe an endless loop in the vertical plane. The open sides of the guide sections 13, 14 face towards each other. The sorting conveyor 3 comprises a large number of carrying elements 16 distributed over the length thereof, which elements are attached to an endless chain (not shown) at regularly spaced position. When the chain is driven, the carrying elements are moved in the direction of transport 48 as well.

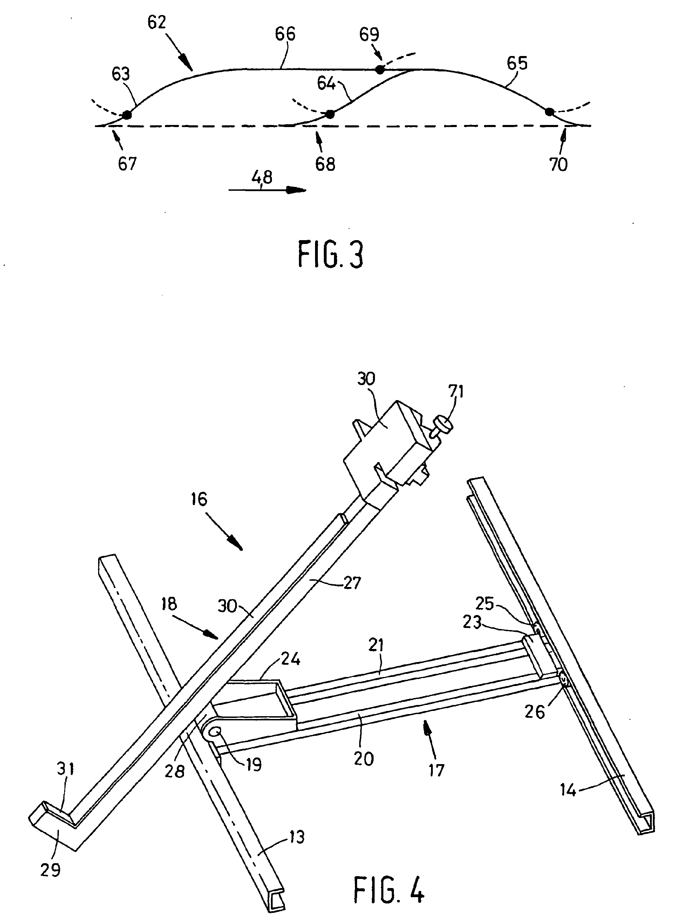

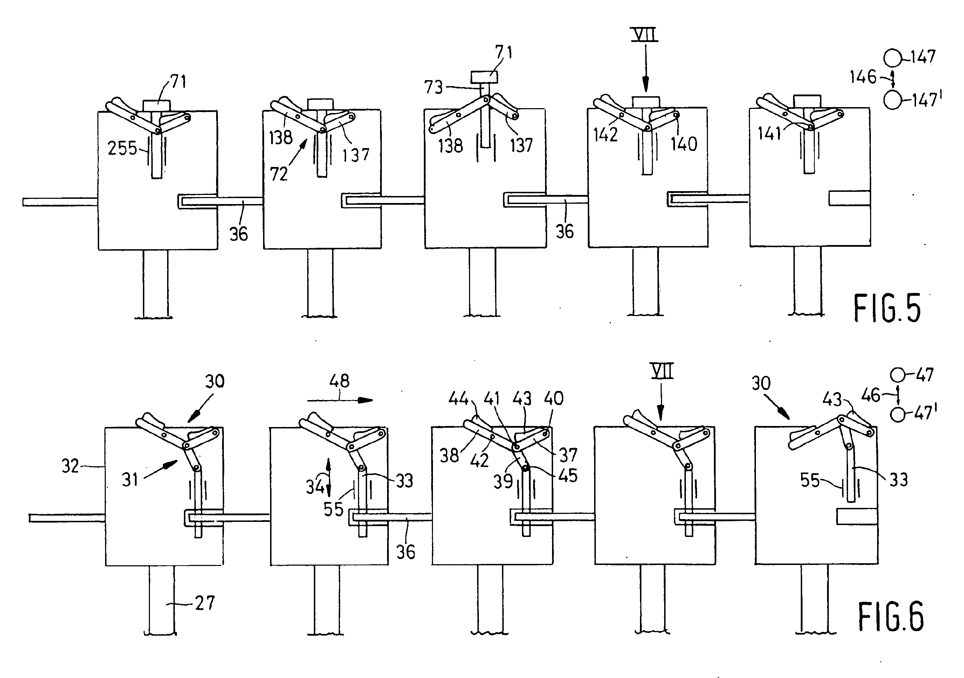

The carrying elements 16 are each built up of a base part 17 and a load-bearing part 18. The load-bearing part 18 is pivotally connected to the base part 17 by means of a pivot pin 19. The pivot pin 19 extends parallel to the direction of transport near the guide section 13, at the upper side thereof. The base part 17 essentially comprises two transverse strips 20, 21, which are interconnected at one of their two ends via a connecting element 23, and which are interconnected at the opposite end via a hinge element 24, which is provided with the aforesaid pivot pin 19. At said opposite ends, each base part 17 is moreover provided with two guide wheels, which travel between the horizontal legs of the U-shape of the guide sections 13, 14, of which guide wheels only the guide wheels 25, 26 are shown in figure 4. The load-bearing part 18 essentially comprises an elongate supporting strip 27, which is provided with a bush 28 at its bottom side, through which the pivot pin 19 extends. Like the transverse strips 20, 21, the supporting strip 27 extends transversely to the direction of transport 48 of the sorting conveyor 3, with the supporting strip 27 extending beyond the guide section 13, seen from the guide section 14, with one end, which end is provided with an upright edge 29. At the opposite end, each supporting strip is provided with a connecting element 30, which will be discussed in more detail yet with reference to figures 5 - 8b. The supporting strip 27 and the inner side of the upright edge 29 are furthermore provided with a lining material 30, 31.

For the sake of clarity, the connecting elements 30 are only shown for those carrying elements that are in a pivoted position. Let there be no mistake about it, however, that since all the carrying elements 16 are of identical construction, all the supporting strips 27 will be provided with a connecting element 30.

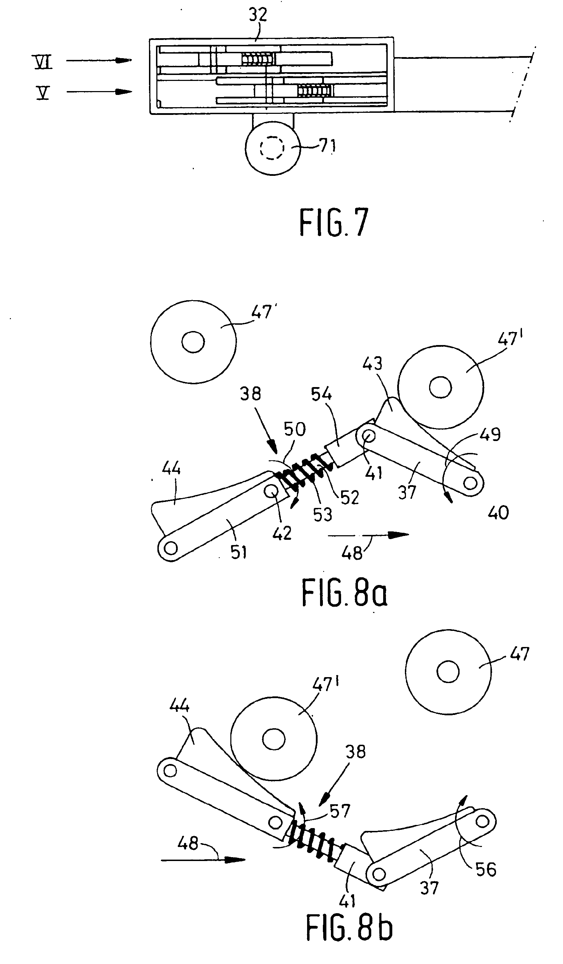

The connecting elements 30 make it possible to connect a supporting strip 27 to an adjacent supporting strip 27. The manner in which said connection is effected will be explained in more detail hereinafter in the description of figure 6 in combination with figure 7.

Figure 6 shows a connecting mechanism 31 for five interconnected connecting elements 30 as present in the upper half of the housing 32 associated with each connecting element 30. The mechanism comprises a pin 33, which is capable of reciprocating motion as indicated by the double arrow 34 within the (schematically shown) guide 55, which might be configured as a bore, for example. In the position according to the four left-hand connecting elements 30, the pin 33 extends through a hole 35 present in a strip 36 that extends from an adjacent connecting element (also refer to figures 2a and 2b). It will be apparent to those skilled in the art that because of the pin 33 - hole 35 connection between two adjacent connecting elements 30, pivoting of one of the two associated supporting strips 27 will result in pivoting of the other associated supporting strip 27 as well.

The reciprocating motion of the pin 33 as indicated by the double arrow 34 is effected by means of a linkage consisting of links 37, 38, 39. At one end, the link 37 can pivot about a pivot pin 40, which takes up a fixed position relative to the housing 32. At the opposite end, the link 37 is pivotally connected to an end of both the link 38 and the link 39 by means of a pivot pin 41. Approximately halfway its length, the link 38 can pivot about a pivot pin 42, which takes up a fixed position relative to the housing 32. At their ends remote from the associated supporting strip 27, the links 37, 38 are provided with contact bodies 43, 44. The link 39 is pivotally connected to an end of the pin 33 by means of a pivot pin 45.

The cam body 47 can be moved into the path of one of the two contact bodies 43, 44, depending on which of the two contact bodies 43, 44 is positioned more outwardly, by suitably driving the cam body 47 as indicated by the double arrow 46. In figure 6 the position in which the cam body 47 extends in the path of one of the two contact bodies 43, 44 is indicated at 47'. Suppose it is desirable to have the pin 33 of the most right-hand connecting element 30 extend through the hole 35 of an adjacent connecting element 30 (in contrast to the illustrated situation), the cam body 47 would have to be moved to the position 47' before the connecting element 30 passes the cam body 47, causing the cam body 47 to come into contact with the contact body 43 upon movement of the carrying elements 16. As a result, the links 37, 38 will pivot about respective pivot pins 40, 42 (figure 8a) in the directions indicated by the arrows 49, 50, respectively.

The link 38 is a link that is made up of a fixed link portion 51 and a pin portion 52 that is rigidly connected thereto, which pin portion has a smaller diameter that the fixed link portion 51 and which is surrounded by a compression spring 53. The free end of the pin portion 52 extends into a central bore in the bore portion 54 of the link 38, which bore portion has a length such that the pin portion 52 is capable of reciprocating motion therein in the longitudinal direction thereof. Thus it has become possible to reduce the length of the link 38 temporarily, at least insofar as it extends between the pivot pins 41 and 42, with the compression spring 53 causing the links 37 and 38 to take up the position that is shown in figure 8b once the links 37 and 38 have passed the position in which they are in line between the fixed pivot pins 40 and 42 during the aforesaid pivoting as indicated by the arrows 49 and 50. As a result of the inward movement of the pivot pin 41 and the connection of said pivot pin to the pin 33 via the link 39, the pin 33 will move in the same direction through the guide 55, as a result of which the pin 33 will move into the hole 35 in question.

Reference is made to figure 8b in connection with the retracting of the pin 33 from the hole 35, to which end the cam body 47 is placed in the position 47' temporarily, as a result of which the cam body 47 will come into contact with the contact body 44 upon movement of the carrying elements 16 in the direction of transport 48, with the links 37 and 38 pivoting in the reverse direction of the arrows 56, 57, causing the pivot pin 41 to move outwards, thereby pulling the pin 33 out of the hole 35. It will be apparent that once one of the two contact bodies 43, 44 has passed the cam body 47 in the position 47 ', the cam body 47 must be moved out of the path of the contact bodies 43, 44 again.

Returning to figure 1, we see that the sorting conveyor 3 conveys six containers 9. The length of said containers 9, which are identical to each other, is such that each container 9 is supported by five supporting strips 27 associated with five carrying elements 16. The five supporting strips 27 in question are interconnected by means of the associated connecting elements 30, in a manner as already described in the foregoing in the description of in particular figures 6, 8a and 8b. To determine which connecting elements 30 are to be interconnected, detection means are used in the sorting device 1, which detect on which adjacent supporting strips 27 a particular container 9 is supported, which information can also be derived from the position the container 9 take up on the supply conveyor 2 at a specific point in time. The control system of the sorting device 1 will now drive the cam body 47 to interconnect the supporting strips 27 in question on the basis of information obtained from the detection means.

To enable the interconnected supporting strips 27 to pivot so as to deposit products 15 present in the containers 9 onto one of the two chutes 56, 57, which chutes 56, 57 are defined by partitions 58, 59, 60 on the sloping surface 61, a stationary cam track system 62 is provided on the side of the sorting conveyor remote from the chutes 56, 57, in which connection reference is also made to figure 3. The cam track system 62 comprises two upwardly sloping cam track portions 63, 64 for sorting products 15 from a container 9 into the respective chutes 56, 57. In addition to that, the cam track system 62 comprises a downwardly sloping cam track portion 65 at the end thereof. An elevated, horizontally extending cam track portion 65 connects to the upwardly sloping cam track portion 63 on one side and to the downwardly sloping cam track portion 65 on the other side. The upwardly sloping cam track portion 63, too, connects to the downwardly sloping cam track portion 65 again. The cam track system 62 further comprises four switches 67, 68, 69, 70, a second position of which is illustrated in dotted lines, with a thick dot indicating a pivot point associated with the switch in question.

As is shown in figure 1, but also in figures 2a and 2b, a cam wheel 71 on the central (i.e. third) connecting element 30 of the five interconnected connecting elements 30 has been extended outwards in a manner which will be explained in more detail yet in the description of figure 5. As a result of said cam wheel 71 being extended, said cam wheel will move onto the upwardly sloping cam track portion 63 via said switch 67 upon movement ahead of the sorting conveyor 3, assuming that the switch 67 is in the lower position. The pivoting of the supporting strip 27 associated with the connecting element 30 whose cam wheel 71 has been extended will lead to the supporting strips 27 whose connecting elements 30 are connected to the connecting element 30 with the extended cam wheel 71 pivoting along therewith, so that the five supporting strips 27 will actually behave as one unit. This is important, because if the connecting elements 30 in question would not be interconnected but all five associated cam wheels 71 would be extended, the associated supporting strips 27 would pivot one after the other, thus forming a sloping and changing supporting surface for the container 9.

Once the cam wheel 71 has reached the elevated, horizontally extending cam track portion 66 or a position just in front of said portion, a product 15 present in the container 9 in question will slide from said container 9 into the chute 56. The interconnected supporting strips 27 will then remain in their pivoted position because the cam wheel 71 associated with the central supporting strips 27 will continue to travel over the elevated, horizontally extending cam track portion 66 until it blends into the downwardly sloping cam track portion 65, where the interconnected supporting strips 27 in question are pivoted downwards, as is shown for the sixth container 9 in figure 1, until it has taken up the horizontal position again and is subsequently transferred to the discharge conveyor 4. The connecting elements 30 of the supporting strips 27 in question are subsequently disconnected from each other again by being suitably driven by the control system of the sorting device 1, after which the conveying means 16 are guided downwards and, via the lower return portion of the sorting conveyor 3, upwards again at the beginning of the sorting conveyor 3 for taking over a next container 9 from the supply conveyor 2. Subsequently, a new group of interconnected supporting strips 27 is created again, which group may differ from the previous group as regards the composition thereof. All this depends on the supply of containers 9 via the supply conveyor 2. It is important in this context to note that the supply conveyor 2 need not stop at any point but can continuously supply containers 9 to the sorting conveyor 3.

Assuming that the switch 67 would be in the high position (illustrated in dotted lines), an extended cam wheel 71 would logically pass said switch 67 and be guided upwards via the upwardly sloping cam track portion 64 in the lower position of the next switch 68 so as to effect a pivoting movement of the respective group of supporting strips 27 at that location, resulting in a product 15 being placed in the chute 57. The cam wheel 71 in question will push the switch 69 to the upper position (illustrated in dotted lines) for that matter, so as to enable the cam wheel 71 to pass. Once the cam wheel 71 has passed the switch 69, the switch will return to the lower position again under the influence of spring action, so that the cam track portion 66 will connect to the cam track portion 65 again.

If a product 15 present in a container 9 is not intended for being sorted into one of the chutes 56, 57, as has been the case, for example, for the product 15 in the container 9 that is just being transferred from the sorting conveyor 3 to the discharge conveyor 4 in figure 1, it can pass the downwardly sloping cam track portion 65 in a possibly extended position of a cam wheel 71 associated with a (central) supporting strip 27 that supports the container 9 in question in that said cam wheel 71 pushes the switch 70 into the upper position (illustrated in dotted lines) against spring action (as with the switch 69).

In the above explanation of the cam track system 62 according to figures 1 and 3, it has been assumed that the extension of a cam wheel 71 takes place at a position upstream of the upwardly sloping cam track portion 63. On the other hand it is also possible to have said extension of the cam wheels 71 take place shortly before their arrival at an upwardly sloping cam track portion 63, 64, which obviates the need to use switches 67, 68 that form part of the upwardly sloping cam track portions 63, 64 in question. The presence of a switch 70 might not be required, either, if no cam wheel 71 associated with the supporting strips 27 that support a container 9 carrying a product 15 that is not to be sorted into either one of the two chutes 56, 57 were to be extended at all.

Furthermore alternatively, the cam wheels 71 for all the connecting elements 30 may be in the extended position at all times (and in that sense not be drivable, therefore) and the movement of a central cam wheel 71 associated with a group of interconnected supporting strips 27 over one of the upwardly sloping cam track portions 63, 64 can be controlled by switching the switches 67 to the lower position in a very precisely timed manner, i.e. just before the cam wheel 71 in question arrives at the beginning of the switch 67, 68 in question, but after the downstream cam wheel 71 has passed the (beginning of the) switch 67, 68.

Figure 5 shows the extension mechanism 72 (in fivefold) for the five connecting elements 30 as shown in figure 6, which extension mechanism 72 is accommodated in the lower half of the housing 32 of each connecting element 30. As is clearly shown in figure 5, only the cam wheel 71 of the central connecting element 30 is extended. The extension mechanism 72 comprises two links 137, 138, which are pivotally interconnected at their facing ends and which are pivotable about pivot pins 140 and 142, respectively. The links 137 and 138 that are interconnected by the pivot pin 141 are quite similar to the links 37 and 38 that have already been discussed extensively in the foregoing, in particular with reference to figures 8a and 8b. A pin 73 extending in line with the associated supporting strips 27 extends below the links 137, 138, on a free end of which the cam wheel 71 is mounted.

The pin 73 is now mechanically connected to the pivot pin 141 by means of a pin extending perpendicularly to the plane of drawing, which pin may also simply be the extension of the pin member associated with the pivot pin 141. The pin extends through a slotted hole that extends in the direction of transport 48. Because of the connection via said slotted hole, the pin 73 is capable of making a rectilinear movement in its longitudinal direction through the guide 255 in spite of the slightly lateral movement that the pivot pin 141 makes while the extension mechanism is being operated. In actual fact it may be necessary to form the pin 73 with a larger diameter than is shown in figure 5. Alternatively it would also be possible to use a connection via a connecting link similar to the connecting link 39 in figure 6 instead of using the slotted hole connection.

The cam body 147 can be moved to the position 147' (temporarily) by suitably driving the cam body 147, which is positioned at a lower level than the cam body 47 and which is capable of reciprocating vertical movement as indicated by the double arrow 146, so as to cause a cam wheel 71 to slide inwards or, quite the opposite, outwards, as is shown for the central connecting element 30 in figure 5.

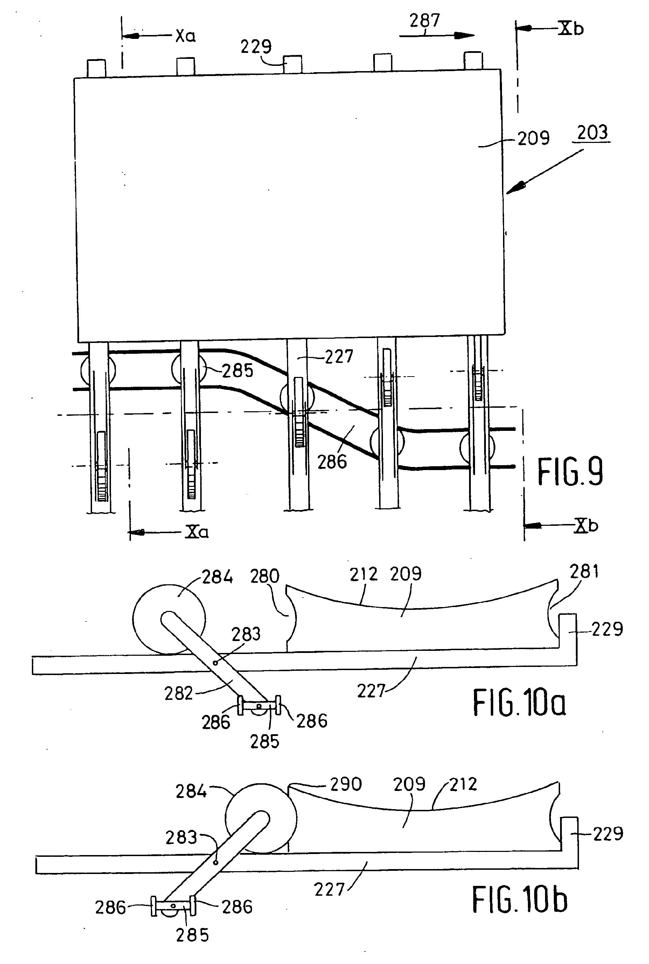

Figure 9 is a plan view of a part of a sorting conveyor 203 that may form part of a sorting device according to a first preferred embodiment of the present invention. Only five supporting strips 227 are shown, which are provided with an upright edge 229 at one end. The supporting strips 227 that are shown in figure 9 jointly support a container 209, which is of different construction than the container 1 in the sorting device 1, in any case because an arcuate recess 280, 281 is provided in the vertical longitudinal side walls. Each supporting strip 227, which is pivotable just like the supporting strip 27, is provided with a tilting arm 282, which is tiltable relative to the associated supporting strip 227 about a tilt axis 283 extending parallel to the direction of transport of the sorting conveyor 203. At the end positioned above the supporting strip 227, the tilting arm 282 is provided with a engaging wheel 284, whose radius corresponds to the radius of the arcuate recesses 280, 281. At the end of the tilting arm 282 positioned under the supporting strips 227, said tilting arm 282 is provided with a cam wheel 285, which travels in a stationary cam track 286. Based on the direction of transport 287 it can readily be derived from figure 9 how the engaging wheel 284 can be moved from the non-engaging position as shown in figure 10a to the engaging position as shown in figure 10b. In this way all five contact wheels 284 can be placed into engagement with one of the two vertical longitudinal side walls 209, causing the container 209 to be clamped between the five engaging wheels 284 on the one hand and the five upright edges 229 on the other hand.

To obtain an improved engagement, the upright edges 229 might also be provided with a certain convexity directed towards the container 209, whose radius corresponds to the radius of the recess 281. In addition to that, the engagement by engaging means of the container 209 for the purpose of ensuring that the container remains on the supporting strips 227, also in the pivoted position of the containers, could generally be effected by means of a form-locked or force-locked connection between the supporting strips 227 and the container. Thus, the tilting arm might also be provided with hook means engaging around the longitudinal edge 290 of the container 209, possibly in a recess in the longitudinal edge 290, rather than with the engaging wheel 284.

Starting now from the situation in which all the engaging wheels 284 associated with the supporting strips 227 that support a container 209 engage the upright longitudinal side walls of the container 209, thus clamping the container against the associated upright edges 229, pivoting of one of the supporting strips 227, for example in one of the manners explained for the supporting strip 27, will cause the other supporting strips 227 supporting the container 209 to pivot along therewith on account of the mechanical connection that has been effected between the respective supporting strips 227 via the container 209. Said container 209 forms the connecting factor between the respective supporting strips 227 in question in that case.

The important advantage of the present preferred embodiment is the fact that no (artificial) intelligence at all is required for interconnecting the supporting strips 227 associated with a particular container 209, and that thus there is no need to drive the engaging wheel 284 in a flexible manner. In the situation in which a specific supporting strip 227 would not contribute towards supporting the container 209, the associated engaging wheel 284 would nevertheless make the inward movement, without this leading to a container 209 being engaged, of course. This implies that it is also possible not to use detection means for determining exactly how a container 209 lands on the sorting conveyor 203, at least as far as this would be necessary for interconnecting adjacent supporting strips 227. On the other hand it will also be possible to use the engaging means as detection means for determining on which adjacent supporting strips 227 a container, or a product to be sorted, is present. This information may subsequently be used in driving the pivot means.

It will be apparent to those skilled in the art that the engaging wheels 284 can be returned from the engaging position shown in figure 10b to the non-engaging position shown in figure 10a by having a cam track 286 extend along a reverse path.

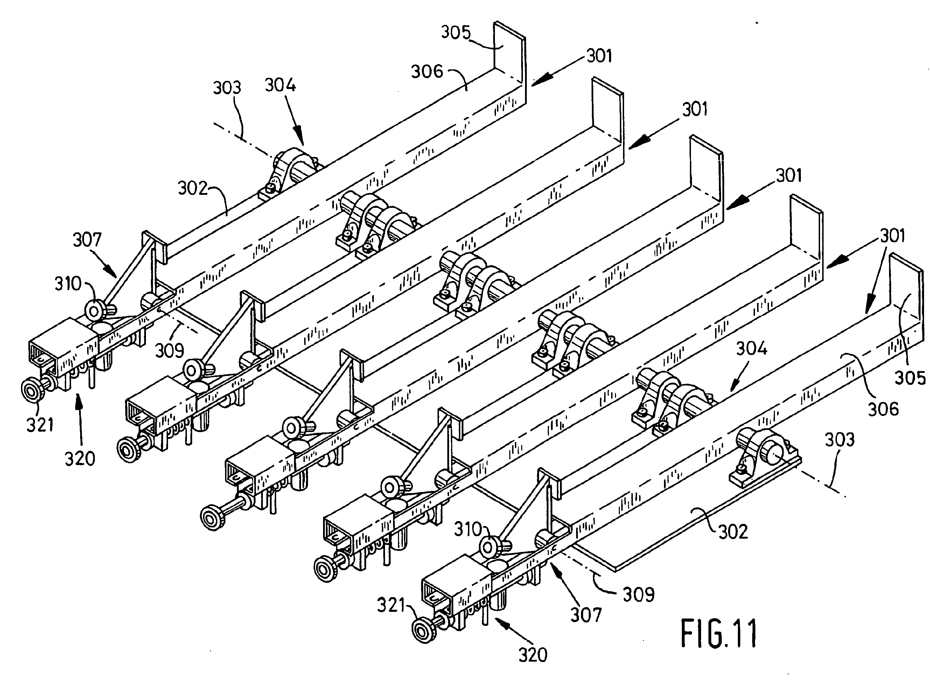

Figures 11-15 relate to a second preferred embodiment of the sorting device according to the invention. As is the case with the first preferred embodiment according to figures 8a, 8b and 9, adjacent carrying elements are interconnected via the container that is supported by the carrying elements in question.

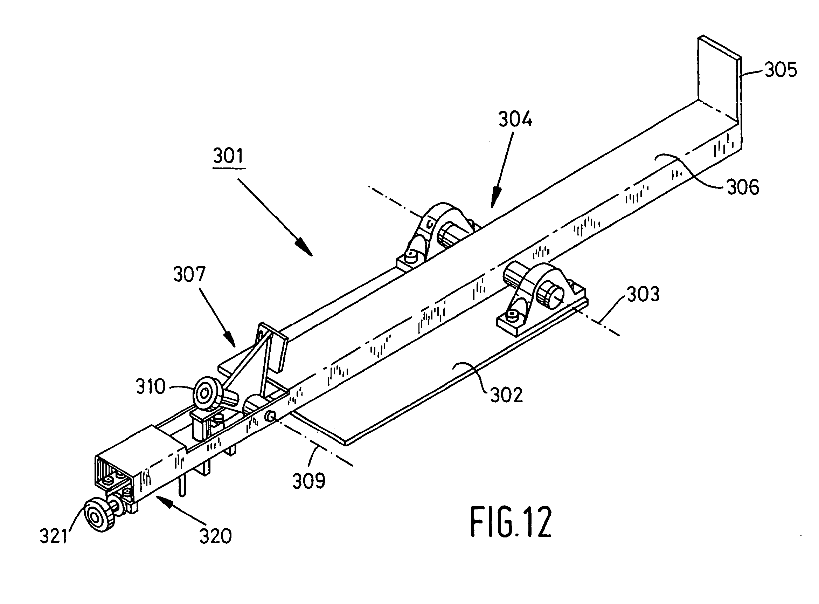

Figure 11 shows five adjacent carrying elements, whilst figure 12 shows an individual carrying element 301. Each carrying element 301 comprises a baseplate 302 and an elongated supporting strip 304 that is pivotable about a pivot axis 303 with respect to the associated baseplate 302. The carrying elements 301 form part of a sorting conveyor, with the base plates 302 being attached in regularly spaced-apart relationship to an endless chain (not shown) that defines an endless path for the carrying elements 301 in the vertical plane, comparable to the situation in the first preferred embodiment as explained inter alia with reference to figure 1. The pivot axes 303 extend parallel or at least tangentially relative to the endless conveying path.

At one end the supporting strips 304 are provided with an upright stop edge 305, against which containers, such as the container 9, being supported on the load-bearing surfaces 306 of a group of adjacent supporting strips 304 are clamped by means of a clamping mechanism 307 at the opposite end of the supporting strip 304 in question.

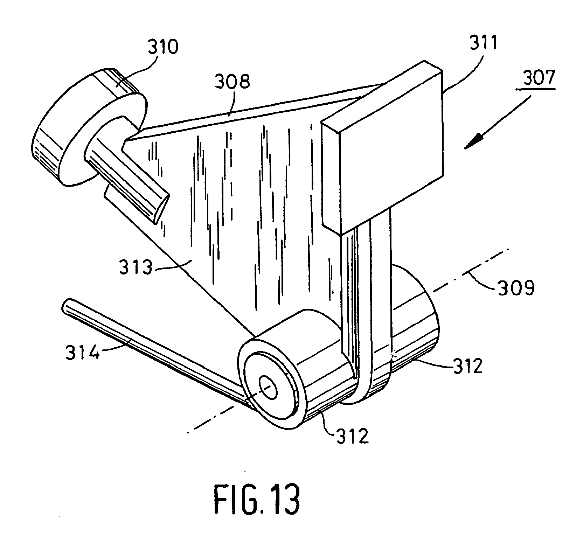

The clamping mechanism 307 is shown in more detail in figure 13. The clamping mechanism 307 comprises a substantially triangular baseplate 308, which is pivotally journalled with respect to the remaining part of the supporting strip 304 in the bottom corner thereof, about a pivot axis 309 that extends parallel to the pivot axis 303. At the location of the corner of the baseplate 308 remote from the stop edge 305, the clamping mechanism 307 is provided with a cam wheel 310, whilst at the location of the corner of the baseplate 308 that faces towards the top page 305 the clamping mechanism 307 is provided with a rubber clamping surface 311. At the location of the bottom corner, a torsion spring 312 is provided on either side of the baseplate 308, coaxially with the pivot axis 309, one leg 313 of which torsion spring presses against the rear side of the clamping surface 311, whilst the other leg 314 presses against part of the supporting strip 304 in a manner that is not shown in detail.

Because of the action of the torsion springs 312, the clamping mechanism 307 tends to assume the position that is shown in figure 12 in unloaded condition, in which the clamping surface 311 is slightly inclined towards the stop edge 305 and the space between the stop edge 305 and the clamping surface 311 is not large enough for accommodating a container therebetween. However, by engaging the (upper side of the) cam wheel 310 with a cam guide (not shown) and pressing it down against the action of the torsion springs, the clamping mechanism 307 will assume the position as shown for the five carrying elements 301 in figure 11. Thus sufficient space is provided between the clamping surface 311 and the stop edge 305 for accommodating a container therebetween, and the desired clamping down of said container between the clamping surface 311 and the stop edge 305 can subsequently be effected when the downward pressure on the cam wheel 310 is released by terminating the cam track on which the cam wheel 310 engages.

In addition to a clamping mechanism 307, each carrying element 301, more specifically each supporting strip 304 thereof, also comprises an extension mechanism 320 at the end opposite the stop edge 305 for selectively extending a cam wheel 321. By (selectively) extending one cam wheel 321 associated with one of the carrying elements 301 that support a specific container, joint pivoting of the carrying elements 301 about the pivot axis 303 can take place because of the joint clamping engagement of the carrying elements 301 on the container in question, with only one cam wheel 321 being extended so as to have said wheel travel over a cam track forming part of a cam track system, such as the cam track system 62 in figure 1. In figure 11 the cam wheel associated with the central carrying element 301 is shown in extended position.

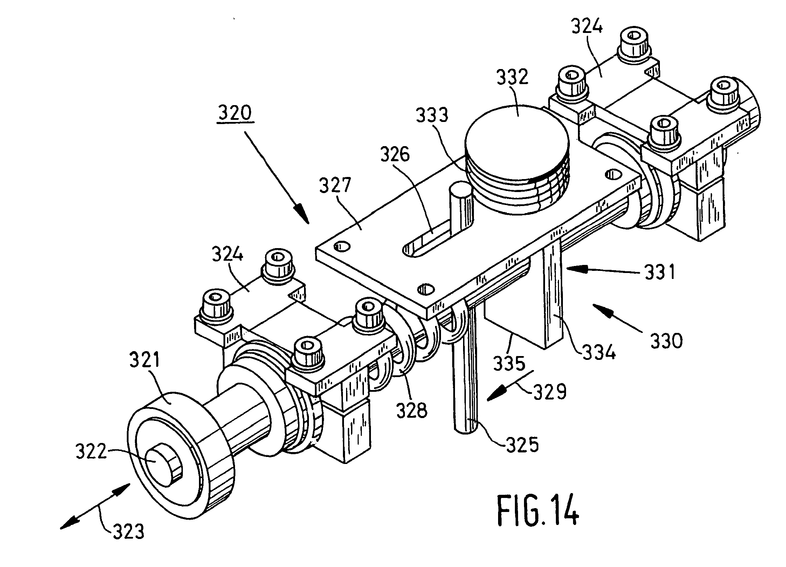

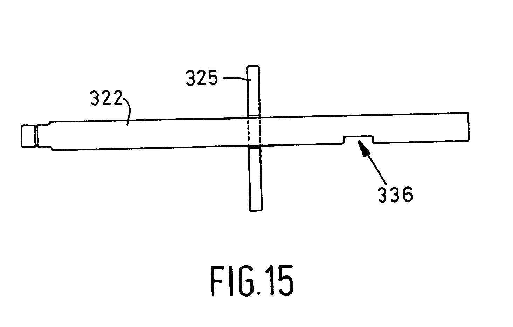

The cam wheel 321 is provided at the end of a sliding shaft 322, being rotatable about its central axis. The sliding shaft 322 is slidably accommodated (in the directions indicated by the double arrow 323) in slide bearings 324 . A vertical bore is provided in the sliding shaft 322 between the slide bearings 324, through which an actuating pin 325 extends (also refer to figure 15). Above the sliding shaft 322, the actuating pin 325 also extends through a guide groove 326 in the sliding plate 327. A compression spring 328, which surrounds the sliding shaft 322, acts between the sliding bearing 324 located nearest the cam wheel 321 and the actuating pin 325. Because of the action of the compression spring 328, the extension mechanism 320 tends to assume the position that is shown in figure 14, in which the cam wheel 321 is retracted and thus remains outside the reach of a cam track. To extend the sliding shaft 322 with the cam wheel 321, a force is exerted on a switch (not shown) in the direction indicated by the arrow 329, which switch can be placed in the path of the actuating pin 325 temporarily, against the action of the compression spring 328, causing the sliding shaft 322 to move out.

The sliding shaft is now locked in the extended position by means of a locking mechanism 330, which also forms part of the extension mechanism 320. The locking mechanism 330 comprises a locking element 331, which extends partly above and partly below the sliding plate 327. At the upper side, the locking element 331 is provided with a press-on surface 332 provided with a projecting circumferential edge. A compression spring 333 acts between said projecting circumferential edge and the sliding plate 327.

The locking element 331 comprises a U-shaped part 334 under the sliding plate 327, the upper ends of the legs of which U-shape are connected to the press-on surface 332 via openings provided in the sliding plate 327 for that purpose. Because of the action of the compression spring 333, the horizontal upper edge 335 of the web of the U-shaped part 334 presses against the bottom side of the sliding shaft 322. The sliding shaft 322 is provided with a groove at said bottom side, which groove, in the position that is shown in figure 14, extends between the U-shaped part 334 of the locking element 331 and the slide bearing located furthest away from the cam wheel 321. Upon extension of the cam wheel 321, the groove will thus be positioned at the same axial position as the U-shaped part 334, which will subsequently move upward on account of the action of the compression spring 333, as a result of which the web of the U-shaped part 334 will fall partially within the groove 336 in question, thus locking the sliding shaft 322 in the extended position thereof.

Unlocking takes place by means of the cam wheel 310 of the clamping mechanism 307. The fact is that the clamping engagement of the container between the clamping surfaces 311 and the stop edges 305 associated with the carrying elements 301 that support the container in question must be released before a container is transferred to a discharge conveyor by the sorting conveyor in question, to which end the cam wheels 310 are pressed down by means of a cam guide so as to pivot the clamping mechanism 307 about the pivot axis 309 from the position in that is shown in figure 12 to the position that is shown in figure 11. In doing so, the underside of the cam wheel 310 presses on the press-on surface 332 of the locking element 331 against the action of the compression spring 333, as a result of which the upper edge 335 of the web of the U-shaped part 334 will be positioned under the sliding shaft 322 again and said sliding shaft 322 will move back to the position that is shown in figure 14 under the influence of the action of the compression spring 328.

The preferred embodiments as described above must not be construed as being limitative to the present invention, since countless variants are conceivable within the scope of the invention. Thus it is explicitly stated herein that the present invention may also relate to two-sided sorting devices, in which the sorting of products can take place on two longitudinal sides of the sorting conveyor instead of only on one side, as is the case with the two preferred embodiments as described above.

## Claims

1. A sorting device (1) for sorting products (15), such as in particular pieces of luggage, comprising a supply conveyor (2), sorting conveyor (203), to which the supply conveyor connects for transferring products (15) to be sorted from the supply conveyor (2) to the sorting conveyor (203), the sorting conveyor being arranged for selectively delivering products to be sorted to a sorting position (56, 57) during transport in a direction of transport (48), said sorting conveyor (3) comprising a frame as well as a plurality of carrying elements (227; 301) that are movable along guide means (13, 14) of the frame for supporting a product (15) to be sorted in a group of carrying elements positioned adjacent to each other, each of which carrying elements (227; 301) being pivotable by pivot means (63, 64, 321) about a pivot axis (303) extending parallel to the direction of transport (48) so as to cause a product (15) to slide from said group of adjacent carrying elements to the sorting position, wherein the sorting conveyor (203) comprises connecting means (282, 284, 307) for temporarily interconnecting a group of adjacent carrying elements, so that pivoting by the associated pivot means of some of the carrying elements (227; 301) of said group of interconnected adjacent carrying elements will cause the other elements of said group of interconnected adjacent carrying elements to pivot along therewith,
**characterised in that** the sorting device (1) comprises separate containers (209) for accommodating the products (15) to be sorted therein, wherein the products (15) to be sorted are each transferred to a group of adjacent carrying elements of the sorting conveyor (203) in a container (209) of the supply conveyor (2), which group of carrying elements is provided with holding means (229; 305) for holding the container (209) upon pivoting of the adjacent carrying elements with a container (209) present thereon, whilst a product (15) being accommodated in the container (209) slides off the container (209), and
**in that** the connecting means (282, 284; 307) comprise an engagement element (284; 311) for each carrying element (227; 301), which engagement element (284; 311) functions to engage the container (209)..

2. A sorting device according to the preceding claim, **characterised in that** the pivot means (63, 64, 321) comprise a stationary cam track (63, 64), along which a cam element (71; 321) of a carrying element (227; 301) can selectively travel so as to selectively pivot the carrying element (227; 301) in question as well as the carrying elements (227; 301) connected thereto.

3. A sorting device according to claim 2, **characterised in that** the pivot means (63, 64; 321) comprise a cam element (71; 321) for each carrying element (227; 301).

4. A sorting device according to claim 3, **characterised in that** each cam element (71; 321) can be driven to selectively place the cam element (71; 32) into contact with the cam track (62) or keeping the cam element spaced from the cam track (62).

5. A sorting device according to claim 2 or 3, **characterised in that** the cam track (62) comprises a drivable entry portion (67, 68), which can be selectively moved into or out of the path of movement of cam element (71; 321).

6. A sorting device according to claim 2, 3, 4 or 5, **characterised in that** said cam track (62) is disposed at an outer side of the carrying element (227; 301)

7. A sorting device according to any one of the preceding claims, **characterised in that** the holding means comprise an upright edge (229; 305) for each carrying element (227; 301), against which the container (209) abuts in the pivoted position of the adjacent carrying elements that support the container (209).

8. A sorting device according to any one of the preceding claims, **characterised in that** the engagement elements (284; 311) are arranged for engaging a side of the container (209) that extends parallel to the direction of transport (48).

9. A sorting device according to claim 7 or 8, **characterised in that** the engagement elements (284; 311) are arranged for clamping the container (209) against the upright edge (229; 305).

10. A sorting device according to any one of the preceding claims, **characterised in that** the dimensions of the containers (209), seen in the direction of transport (48), are such that each container (209) is supported by at least three carrying elements on the sorting conveyor (203).

11. A sorting device according to any one of the preceding claims, **characterised in that** the sorting conveyor (203) is an endless conveyor.

12. A sorting device according to any one of the preceding claims, **characterised in that** detection means are provided for determining on which adjacent carrying elements a product (15) to be sorted is transferred from the supply conveyor (2) to the sorting conveyor (203) and that control means are provided for driving the connecting means (282, 284; 307) on the basis of information from the detection means for interconnecting the adjacent carrying elements in question.

13. A sorting device according to any on of the preceding claims 1-11, **characterised in that** the connecting means (282, 284; 307) operate independently of the possible presence of a container (209) on associated carrying elements.

14. A sorting device according to any one of the preceding claims, **characterised in that** detection means are provided for determining on which adjacent carrying elements a product (15) to be sorted is transferred from the supply conveyor (2) to the sorting conveyor (203), and **in that** control means are provided for driving the pivot means (63, 64; 321) on the basis of information from the detection means.

15. A sorting device according to claim 14, **characterised in that** said control means are arranged for driving the front and preferably only cam element (71; 321) associated with a carrying element (227; 301) of a group of adjacent carrying elements interconnected by the connecting means (282, 284; 307), said associated carrying element being positioned in the centre of the group of interconnected adjacent carrying elements, for selectively placing the driven cam element (71; 321) into contact with a cam track (63, 64).

16. A sorting device according to any one of the preceding claims, **characterised in that** the pivot axis (303) is located at a position off the centre of the dimension of the carrying elements (227; 301), seen in horizontal direction transversely to the direction of transport (48).

17. A sorting device according to any one of the preceding claims, **characterised in that** all the carrying elements (227; 301) are of identical construction.

18. A sorting device according to any one of the preceding claims, **characterised in that** at least two, preferably at least three carrying elements (227; 301) are provided per metre, seen in the direction of transport (48).

19. A method of operating a sorting device (1) for sorting products (15), such as in particular pieces of luggage, comprising a supply conveyor (2), a sorting conveyor (203), to which the supply conveyor (2) connects for transferring products (15) to be sorted from the supply conveyor (2) to the sorting conveyor (203), the sorting conveyor (203) being arranged for selectively delivering products (15) to be sorted to a sorting position (56, 57) during transport in a direction of transport (48), said sorting conveyor (203) comprising a frame as well as a plurality of carrying elements (227; 301) that are movable along guide means (13, 14) of the frame for supporting a product (15) to be sorted in a group of carrying elements positioned adjacent to each other, each of which carrying elements (227; 301) being pivotable by pivot means (63, 64; 321) about a pivot axis (303) extending parallel to the direction of transport (48) so as to cause a product (15) to slide from said group of adjacent carrying elements to the sorting position (56, 57), comprising the steps of temporarily interconnecting a group of adjacent carrying elements supporting a product (15) to be sorted with connecting means (282, 284; 307) and jointly pivoting said group of temporarily interconnected adjacent carrying elements for the purpose of sorting out the product (15) in question in lateral direction,
wherein said joint pivoting of the group of temporarily interconnected adjacent carrying elements is effected by pivoting only one of the adjacent carrying elements, as a result of which the other carrying elements of said group of temporarily interconnected adjacent carrying elements will pivot along with the carrying element (227; 301) that is being pivoted on account of the fact that said carrying elements are interconnected, wherein
the sorting device (1) comprises separate containers (209) for accommodating the products (15) to be sorted therein, wherein the products (15) to be sorted are each transferred to a group of adjacent carrying elements of the sorting conveyor (203) in a container (209) of the supply conveyor (2), which group of carrying elements is provided with holding means (229; 305) for holding the container (209) upon pivoting of the adjacent carrying elements with a container (209) present thereon, whilst a product (15) being accommodated in the container (209) slides off the container (209), and wherein
the connecting means (282, 284; 307) comprise an engagement element (284; 311) for each carrying element (227; 301), which engagement element (284; 311) functions to engage the container (209).

## Patentansprüche

1. Sortiervorrichtung (1) zum Sortieren von Produkten (15), wie insbesondere von Gepäckstücken, mit einer Zuführfördereinrichtung (2), einer Sortierfördereinrichtung (203), mit der die Zuführfördereinrichtung verbunden ist, um zu sortierende Produkte (15) von der Zuführfördereinrichtung (2) zur Sortierfördereinrichtung (203) zu überführen, wobei die Sortierfördereinrichtung so angeordnet ist, dass sie beim Transport in einer Transportrichtung (48) zu sortierende Produkte selektiv an einer Sortierstelle (56, 57) abgibt, wobei die Sortierfördereinrichtung (3) einen Rahmen und mehrere Tragelemente (227; 301) aufweist, die zum Halten eines zu sortierenden Produkts (15) in einer Gruppe von nebeneinander angeordneten Tragelementen entlang Führungsmittel (13, 14) des Rahmens beweglich sind, wobei die Tragelemente (227; 301) jeweils über Schwenkmittel (63, 64; 321) um eine Schwenkachse (303) schwenkbar sind, die sich parallel zur Transportrichtung (48) erstreckt, so dass ein Produkt (15) dazu gebracht wird, von der Gruppe nebeneinander liegender Tragelemente zur Sortierstelle zu gleiten, wobei die Sortierfördereinrichtung (203) Verbindungsmittel (282, 284; 307) zur vorübergehenden Verbindung einer Gruppe nebeneinander liegender Tragelemente miteinander aufweist, so dass das Verschwenken einiger Tragelemente (227; 301) der Gruppe miteinander verbundener, nebeneinander liegender Tragelemente durch die zugeordneten Schwenkmittel dazu führt, dass die anderen Elemente der Gruppe miteinander verbundener, nebeneinander liegender Tragelemente zusammen mit diesen verschwenkt werden, **dadurch gekennzeichnet, dass** die Sortiervorrichtung (1) separate Behälter (209) zur Aufnahme der zu sortierenden Produkte (15) darin aufweist, wobei die zu sortierenden Produkte (15) jeweils zu einer Gruppe nebeneinander liegender Tragelemente der Sortierfördereinrichtung (203) in einen Behälter (209) der Zuführfördereinrichtung (2) verlagert werden, wobei die Gruppe von Tragelementen mit Haltemitteln (229; 305) ausgestattet sind zum Halten des Behälters (209) beim Verschwenken der nebeneinander liegenden Tragelemente mit einem darauf angeordneten Behälter (209), während ein im Behälter (209) aufgenommenes Produkt (15) von dem Behälter (209) gleitet, und dass die Verbindungsmittel (282, 284; 307) ein Eingriffselement (284; 311) für jedes Tragelement (227; 301) aufweisen, wobei das Eingriffsmittel (284; 311) dazu dient, am Behälter (209) anzugreifen.

2. Sortiervorrichtung nach dem vorhergehenden Anspruch, **dadurch gekennzeichnet, dass** die Schwenkmittel (63, 64; 321) eine feststehende Nockenbahn (63, 64) umfassen, entlang der sich ein Nockenelement (71; 321) eines Tragelements (227; 301) selektiv bewegen kann, um selektiv das betreffende Tragelement (227; 301) und die damit verbundenen Tragelemente (227; 301) zu verschwenken.

3. Sortiervorrichtung nach Anspruch 2, **dadurch gekennzeichnet, dass** die Schwenkmittel (63, 64; 321) ein Nockenelement (71; 321) für jedes Tragelement (227; 301) aufweisen.

4. Sortiervorrichtung nach Anspruch 3, **dadurch gekennzeichnet, dass** jedes Nockenelement (71; 321) so angetrieben werden kann, dass das Nockenelement (71; 321) selektiv in Kontakt mit der Nockenbahn (62) angeordnet oder das Nockenelement von der Nockenbahn (62) beabstandet gehalten wird.

5. Sortiervorrichtung nach Anspruch 2 oder 3, **dadurch gekennzeichnet, dass** die Nockenbahn (62) einen antreibbaren Eingangsabschnitt (67, 68) aufweist, der selektiv in die oder aus der Bewegungsbahn des Nockenelements (71; 321) bewegt werden kann.

6. Sortiervorrichtung nach Anspruch 2, 3, 4 oder 5, **dadurch gekennzeichnet, dass** die Nockenbahn (62) an einer Außenseite der Tragelemente (227; 301) liegt.

7. Sortiervorrichtung nach einem der vorhergehenden Ansprüche, **dadurch gekennzeichnet, dass** die Haltemittel einen aufrechten Rand (229; 305) für jedes Tragelement (227; 301) aufweisen, an dem der Behälter (209) in der verschwenkten Stellung der nebeneinander liegenden Tragelemente, die den Behälter (209) stützen, anliegt.

8. Sortiervorrichtung nach einem der vorhergehenden Ansprüche, **dadurch gekennzeichnet, dass** die Eingriffselemente (284; 311) so angeordnet sind, dass sie an einer sich parallel zur Transportrichtung (48) erstreckenden Seite des Behälters (209) angreifen.

9. Sortiervorrichtung nach Anspruch 7 oder 8, **dadurch gekennzeichnet, dass** die Eingriffsmittel (284; 311) so angeordnet sind, dass sie den Behälter (209) am aufrechten Rand (229; 305) klemmen.

10. Sortiervorrichtung nach einem der vorhergehenden Ansprüche, **dadurch gekennzeichnet, dass** die Behälter (209) in Transportrichtung (48) gesehen derart bemessen sind, dass jeder Behälter (209) von mindestens drei Tragelementen auf der Sortierfördereinrichtung (203) gehalten ist.

11. Sortiervorrichtung nach einem der vorhergehenden Ansprüche, **dadurch gekennzeichnet, dass** die Sortierfördereinrichtung (203) eine Kreisfördereinrichtung ist.

12. Sortiervorrichtung nach einem der vorhergehenden Ansprüche, **dadurch gekennzeichnet, dass** Erfassungsmittel vorgesehen sind, die bestimmen, auf welchem der nebeneinander liegenden Tragelemente ein zu sortierendes Produkt (15) von der Zuführfördereinrichtung (2) zur Sortierfördereinrichtung (203) verlagert wird, und dass Steuermittel vorgesehen sind, die die Verbindungsmittel (282, 284; 307) auf der Grundlage von Informationen der Erfassungsmittel so antreiben, dass die betreffenden nebeneinander liegenden Tragelemente miteinander verbunden werden.

13. Sortiervorrichtung nach einem der vorhergehenden Ansprüche 1 bis 11, **dadurch gekennzeichnet, dass** die Verbindungsmittel (282, 284; 307) unabhängig von der möglichen Anwesenheit eines Behälters (209) auf zugeordneten Tragelementen arbeiten.

14. Sortiervorrichtung nach einem der vorhergehenden Ansprüche, **dadurch gekennzeichnet, dass** Erfassungsmittel vorgesehen sind, die bestimmen, auf welchem der nebeneinander liegenden Tragelemente ein zu sortierendes Produkt (15) von der Zuführfördereinrichtung (2) zur Sortierfördereinrichtung (203) verlagert wird, und dass Steuermittel vorgesehen sind, die die Schwenkmittel (63, 64; 321) auf der Grundlage von Informationen der Erfassungsmittel antreiben.

15. Sortiervorrichtung nach Anspruch 14, **dadurch gekennzeichnet, dass** die Steuermittel so angeordnet sind, dass sie das vordere und vorzugsweise lediglich das Nockenelement (71; 321) antreiben, das einem Tragelement (227; 301) aus einer Gruppe nebeneinander liegender Tragelemente, die über die Verbindungsmittel (282, 284; 307) miteinander verbunden sind, zugeordnet ist, wobei das zugeordnete Tragelement in der Mitte der Gruppe miteinander verbundener, nebeneinander liegender Tragelemente angeordnet ist, um das angetriebene Nockenelement (71; 321) selektiv in Kontakt mit einer Nockenbahn (63, 64) anzuordnen.

16. Sortiervorrichtung nach einem der vorhergehenden Ansprüche, **dadurch gekennzeichnet, dass** die Schwenkachse (303) in waagerechter Richtung quer zur Transportrichtung (48) gesehen an einer Stelle außerhalb der Mitte der Abmessungen der Tragelemente (227; 301) liegt.

17. Sortiervorrichtung nach einem der vorhergehenden Ansprüche, **dadurch gekennzeichnet, dass** alle Tragelemente (227; 301) einen identischen Aufbau haben.

18. Sortiervorrichtung nach einem der vorhergehenden Ansprüche, **dadurch gekennzeichnet, dass** in Transportrichtung (48) gesehen mindestens zwei, vorzugsweise mindestens drei Tragelemente (227; 301) pro Meter vorgesehen sind.

19. Verfahren zum Betreiben einer Sortiervorrichtung (1) zum Sortieren von Produkten (15), wie insbesondere von Gepäckstücken, mit einer Zuführfördereinrichtung (2), einer Sortierfördereinrichtung (203), mit der die Zuführfördereinrichtung (2) verbunden ist, um zu sortierende Produkte (15) von der Zuführfördereinrichtung (2) zur Sortierfördereinrichtung (203) zu überführen, wobei die Sortierfördereinrichtung (203) so angeordnet ist, dass sie beim Transport in einer Transportrichtung (48) zu sortierende Produkte (15) selektiv an einer Sortierstelle (56, 57) abgibt, wobei die Sortierfördereinrichtung (203) einen Rahmen und mehrere Tragelemente (227; 301) aufweist, die zum Halten eines zu sortierenden Produkts (15) in einer Gruppe von nebeneinander angeordneten Tragelementen entlang Führungsmittel (13, 14) des Rahmens beweglich sind, wobei die Tragelemente (227; 301) jeweils über Schwenkmittel (63, 64; 321) um eine Schwenkachse (303) schwenkbar sind, die sich parallel zur Transportrichtung (48) erstreckt, so dass ein Produkt (15) dazu gebracht wird, von der Gruppe nebeneinander liegender Tragelemente zur Sortierstelle (56, 57) zu gleiten, wobei das Verfahren die Schritte umfasst, bei denen eine Gruppe nebeneinander liegender Tragelemente, die ein zu sortierendes Produkt (15) halten, über Verbindungsmittel (282, 284; 307) vorübergehend miteinander verbunden werden und die Gruppe vorübergehend miteinander verbundener, nebeneinander liegender Tragelemente zum Aussortieren des betreffenden Produkts (15) in lateraler Richtung gemeinsam verschwenkt werden, wobei das gemeinsame Verschwenken der Gruppe vorübergehend miteinander verbundener, nebeneinander liegender Tragelemente durch das Verschwenken lediglich eines der nebeneinander liegenden Tragelemente erfolgt, wodurch die anderen Tragelemente der Gruppe vorübergehend miteinander verbundener, nebeneinander liegender Tragelemente aufgrund der Tatsache, dass die Tragelemente miteinander verbunden sind, zusammen mit dem Tragelement (227; 301), das verschwenkt wird, verschwenkt werden, wobei die Sortiervorrichtung (1) separate Behälter (209) zur Aufnahme der zu sortierenden Produkte (15) darin aufweist, wobei die zu sortierenden Produkte (15) jeweils zu einer Gruppe nebeneinander liegender Tragelemente der Sortierfördereinrichtung (203) in einen Behälter (209) der Zuführfördereinrichtung (2) verlagert werden, wobei die Gruppe von Tragelementen mit Haltemitteln (229; 305) ausgestattet sind zum Halten des Behälters (209) beim Verschwenken der nebeneinander liegenden Tragelemente mit einem darauf angeordneten Behälter (209), während ein im Behälter (209) aufgenommenes Produkt (15) von dem Behälter (209) gleitet, und wobei die Verbindungsmittel (282, 284; 307) ein Eingriffselement (284; 311) für jedes Tragelement (227; 301) aufweisen, wobei das Eingriffsmittel (284; 311) dazu dient, am Behälter (209) anzugreifen.

## Revendications

1. Dispositif de triage (1) pour trier des produits (15), tels que, en particulier, des bagages, comprenant un transporteur d'alimentation (2), un transporteur de triage (203), auquel le transporteur d'alimentation est raccordé pour transférer des produits (15) destinés à être triés du transporteur d'alimentation (2) au transporteur de triage (203), le transporteur de triage étant agencé pour distribuer sélectivement des produits destinés à être triés à une position de triage (56, 57) durant le transport dans une direction de transport (48), ledit transporteur de triage (3) comprenant un bâti ainsi qu'une pluralité d'éléments de support (227 ; 301) qui sont mobiles le long de moyens de guidage (13, 14) du bâti pour supporter un produit (15) destiné à être trié dans un groupe d'éléments de support positionnés de façon adjacente les uns aux autres, chacun desquels éléments de support (227 ; 301) pouvant pivoter par l'intermédiaire de moyens de pivotement (63, 64 ; 321) autour d'un axe de pivotement (303) s'étendant parallèlement à la direction de transport (48) afin d'entraîner le coulissement d'un produit (15) dudit groupe d'éléments de support adjacents à la position de triage, dans lequel le transporteur de triage (203) comprend des moyens de raccordement (282, 284 ; 307) pour temporairement raccorder mutuellement un groupe d'éléments de support adjacents, pour que le pivotement par l'intermédiaire des moyens de pivotement associés de certains des éléments de support (227 ; 301) dudit groupe d'éléments de support adjacents raccordés mutuellement entraîne le pivotement conjoint avec ceux-ci des autres éléments dudit groupe d'éléments de support adjacents raccordés mutuellement, **caractérisé en ce que** le dispositif de triage (1) comprend des contenants séparés (209) pour loger les produits (15) destinés à être triés dans ceux-ci, dans lequel les produits (15) destinés à être triés sont chacun transférés à un groupe d'éléments de support adjacents du transporteur de triage (203) dans un contenant (209) du transporteur d'alimentation (2), lequel groupe d'éléments de support est pourvu de moyens de retenue (229 ; 305) pour retenir le contenant (209) lors du pivotement des éléments de support adjacents avec un contenant (209) présent sur ceux-ci, alors qu'un produit (15) logé dans le contenant (209) glisse à partir du contenant (209), et **en ce que** les moyens de raccordement (282, 284 ; 307) comprennent un élément d'entrée en prise (284 ; 311) pour chaque élément de support (227 ; 301), lequel élément d'entrée en prise (284 ; 311) sert à entrer en prise avec le contenant (209).

2. Dispositif de triage selon la revendication précédente, **caractérisé en ce que** les moyens de pivotement (63, 64 ; 321) comprennent une piste à came stationnaire (63, 64), le long de laquelle un élément came (71 ; 321) d'un élément de support (227 ; 301) peut sélectivement se déplacer afin de faire sélectivement pivoter l'élément de support (227 ; 301) en question ainsi que les éléments de support (227 ; 301) raccordés à celui-ci.

3. Dispositif de triage selon la revendication 2, **caractérisé en ce que** les moyens de pivotement (63, 64 ; 321) comprennent un élément came (71 ; 321) pour chaque élément de support (227 ; 301).

4. Dispositif de triage selon la revendication 3, **caractérisé en ce que** chaque élément came (71 ; 321) peut être entraîné pour mettre sélectivement l'élément came (71 ; 321) en contact avec la piste à came (62) ou maintenir l'élément came espacé de la piste à came (62).

5. Dispositif de triage selon la revendication 2 ou 3, **caractérisé en ce que** la piste à came (62) comprend une partie d'entrée pouvant être entraînée (67, 68), qui peut être déplacée sélectivement dans le, ou hors du, trajet de mouvement de l'élément came (71 ; 321).

6. Dispositif de triage selon la revendication 2, 3, 4 ou 5, **caractérisé en ce que** ladite piste à came (62) est disposée sur un côté extérieur des éléments de support (227 ; 301).

7. Dispositif de triage selon une quelconque des revendications précédentes, **caractérisé en ce que** les moyens de retenue comprennent un bord vertical (229 ; 305) pour chaque élément de support (227 ; 301), contre lequel le contenant (209) prend appui dans la position de pivotement des éléments de support adjacents qui supportent le contenant (209).

8. Dispositif de triage selon une quelconque des revendications précédentes, **caractérisé en ce que** les éléments d'entrée en prise (284 ; 311) sont agencés pour entrer en prise avec un côté du contenant (209) qui s'étend parallèlement à la direction de transport (48).

9. Dispositif de triage selon la revendication 7 ou 8, **caractérisé en ce que** les éléments d'entrée en prise (284 ; 311) sont agencés pour serrer le contenant (209) contre le bord vertical (229 ; 305).

10. Dispositif de triage selon une quelconque des revendications précédentes, **caractérisé en ce que** les dimensions des contenants (209), en vue dans la direction de transport (48), sont telles que chaque contenant (209) est supporté par au moins trois éléments de support sur le transporteur de triage (203).

11. Dispositif de triage selon une quelconque des revendications précédentes, **caractérisé en ce que** le transporteur de triage (203) est un transporteur sans fin.

12. Dispositif de triage selon une quelconque des revendications précédentes, **caractérisé en ce que** des moyens de détection sont prévus pour déterminer les éléments de support adjacents sur lesquels un produit (15) destiné à être trié est transféré du transporteur d'alimentation (2) au transporteur de triage (203), et que des moyens de commande sont prévus pour entraîner les moyens de raccordement (282, 284 ; 307) en fonction des informations à partir des moyens de détection pour raccorder mutuellement les éléments de support adjacents en question.

13. Dispositif de triage selon une quelconque des revendications précédentes 1 à 11, **caractérisé en ce que** les moyens de raccordement (282, 284 ; 307) fonctionnent indépendamment de l'éventuelle présence d'un contenant (209) sur des éléments de support associés.

14. Dispositif de triage selon une quelconque des revendications précédentes, **caractérisé en ce que** des moyens de détection sont prévus pour déterminer les éléments de support adjacents sur lesquels un produit (15) destiné à être trié est transféré du transporteur d'alimentation (2) au transporteur de triage (203), et **en ce que** des moyens de commande sont prévus pour entraîner les moyens de pivotement (63, 64 ; 321) en fonction d'informations à partir des moyens de détection.

15. Dispositif de triage selon la revendication 14, **caractérisé en ce que** lesdits moyens de commande sont agencés pour entraîner l'élément de came avant, et de préférence le seul élément de came, (71 ; 321) associé à un élément de support (227 ; 301) d'un groupe d'éléments de support adjacents raccordés mutuellement par les moyens de raccordement (282, 284 ; 307), ledit élément de support associé étant positionné au centre du groupe d'éléments de support adjacents raccordés mutuellement, pour mettre sélectivement l'élément came entraîné (71 ; 321) en contact avec une piste à came (63, 64).

16. Dispositif de triage selon une quelconque des revendications précédentes, **caractérisé en ce que** l'axe de pivotement (303) est situé dans une position excentrée de la dimension des éléments de support (227 ; 301), en vue dans la direction horizontale transversalement à la direction de transport (48).

17. Dispositif de triage selon une quelconque des revendications précédentes, **caractérisé en ce que** tous les éléments de support (227 ; 301) sont de construction identique.

18. Dispositif de triage selon une quelconque des revendications précédentes, **caractérisé en ce qu'**au moins deux, de préférence au moins trois, éléments de support (227 ; 301) sont prévus par mètre, en vue dans la direction de transport (48).

19. Procédé de fonctionnement d'un dispositif de triage (1) pour trier des produits (15), tels que, en particulier, des bagages, comprenant un transporteur d'alimentation (2), un transporteur de triage (203), auquel le transporteur d'alimentation (2) est raccordé pour transférer des produits (15) destinés à être triés du transporteur d'alimentation (2) au transporteur de triage (203), le transporteur de triage (203) étant agencé pour distribuer sélectivement des produits (15) destinés à être triés à une position de triage (56, 57) durant le transport dans une direction de transport (48), ledit transporteur de triage (203) comprenant un bâti ainsi qu'une pluralité d'éléments de support (227 ; 301) qui sont mobiles le long de moyens de guidage (13, 14) du bâti pour supporter un produit (15) destiné à être trié dans un groupe d'éléments de support positionnés de façon adjacente les uns aux autres, chacun desquels éléments de support (227 ; 301) pouvant pivoter par l'intermédiaire de moyens de pivotement (63, 64 ; 321) autour d'un axe de pivotement (303) s'étendant parallèlement à la direction de transport (48) afin de faire en sorte qu'un produit (15) coulisse dudit groupe d'éléments de support adjacents à la position de triage (56, 57), comprenant les étapes de raccordement mutuel d'un groupe d'éléments de support adjacents supportant un produit (15) destiné à être trié avec les moyens de raccordement (282, 284 ; 307) et de pivotement conjoint dudit groupe d'éléments de support adjacents temporairement raccordés mutuellement dans le but de trier le produit (15) en question dans une direction latérale, dans lequel ledit pivotement conjoint du groupe d'éléments de support adjacents temporairement raccordés mutuellement est effectué en faisant pivoter seulement un des éléments de support adjacents, en conséquence de quoi les autres éléments de support dudit groupe d'éléments de support adjacents temporairement raccordés mutuellement pivoteront conjointement avec l'élément de support (227 ; 301) qui pivote en raison du fait que lesdits éléments de support sont mutuellement raccordés, dans lequel le dispositif de triage (1) comprend des contenants séparés (209) pour loger les produits (15) destinés à être triés dans ceux-ci, dans lequel les produits (15) destinés à être triés sont chacun transférés à un groupe d'éléments de support adjacents du transporteur de triage (203) dans un contenant (209) du transporteur d'alimentation (2), lequel groupe d'éléments de support est pourvu de moyens de retenue (229 ; 305) pour retenir le contenant (209) lors du pivotement des éléments de support adjacents avec un contenant (209) présent sur ceux-ci, alors qu'un produit (15) logé dans le contenant (209) glisse à partir du contenant (209), et dans lequel les moyens de raccordement (282, 284 ; 307) comprennent un élément d'entrée en prise (284 ; 311) pour chaque élément de support (227 ; 301), lequel élément d'entrée en prise (284 ; 311) sert à entrer en prise avec le contenant (209).
